**Europäisches Patentamt**

**European Patent Office**

**Office européen des brevets**

(19)

(11) Veröffentlichungsnummer: **0 172 468**
**B1**

(12) **EUROPÄISCHE PATENTSCHRIFT**

(45) Veröffentlichungstag der Patentschrift:
**18.01.89**

(51) Int. Cl.⁴: **B 01 D 29/44**, B 29 C 47/68

(21) Anmeldenummer: **85109673.5**

(22) Anmeldetag: **01.08.85**

(54) **Schmutzfilter für thermoplastische Medien.**

(30) Priorität: **22.08.84 DE 8424818 U**
**19.07.85 DE 8520879 U**

(43) Veröffentlichungstag der Anmeldung:
**26.02.86 Patentblatt 86/9**

(45) Bekanntmachung des Hinweises auf die Patenterteilung:
**18.01.89 Patentblatt 89/3**

(84) Benannte Vertragsstaaten:
**AT BE CH DE FR GB IT LI NL SE**

(56) Entgegenhaltungen:
**CH-A- 93 257**
**DE-U- 8 402 924**
**FR-A- 1 281 578**
**GB-A- 2 008 964**

(73) Patentinhaber: **Odenwälder Kunststoffwerke GmbH,**
**Industriegelände, D-6967 Buchen/Odenwald (DE)**

(72) Erfinder: **Dörsam, Karl-Heinz, Gänsäckerstrasse 14,**
**D-6967 Buchen-Bödigheim (DE)**

(74) Vertreter: **Hach, Hans Karl, Dr., Tarunstrasse 23,**
**D-6950 Mosbach-Waldstadt (DE)**

ACTORUM AG

## Beschreibung

Die Erfindung betrifft ein Schmutzfilter für zäh fliessfähige, thermoplastische Medien mit einem in einem öffenbaren Gehäuse ausgesparten Filterraum, in dem ein Sperrkörper sitzt, mit einer im Gehäuse ausgesparten Zuleitung, die in den Filterraum mündet, mit einer im Gehäuse ausgesparten Ableitung, die auf der der Mündung der Zuleitung gegenüberliegenden Seite des Sperrkörpers vom Filterraum ausgeht, mit einem ringförmigen Spalt zwischen einem koaxial zu einer Flussachse gelegenen Umfangsbereich des Sperrkörpers und der gegenüberliegenden Innenwand des Filterraums, welcher Spalt Teil der Strömungsverbindung zwischen Zuleitung und Ableitung ist, bei der der Sperrkörper verstellbar ist aus einer Filterstellung in eine Reinigungsstellung, bei der in Filterstellung des Sperrkörpers der ringförmige Spalt ein Sperrspalt ist, der so eng ist, dass die zurückzuhaltenden Schmutzteile nicht passieren können, bei der in Reinigungsstellung des Sperrkörpers der ringförmige Spalt ein Reinigungsspalt ist, der weiter ist als der Sperrspalt, so dass die vom Sperrspalt zurückgehaltenen Schmutzteilchen passieren können, und mit einem von aussen zugänglichen Verstellorgan zum Verstellen des Sperrkörpers aus seiner Filterstellung in seine Reinigungsstellung und zurück.

Beim Spritzgiessen mit thermoplastischem Kunststoff wird das durch Erhitzen zäh fliessende Medium einer Spritzdüse zugeführt und von dieser in eine angesetzte Spritzform getrieben. Verunreinigungen des Mediums, zum Beispiel durch Metallsplitter, werden am Sperrspalt des Schmutzfilters zurückgehalten. Wenn sich sehr viel Schmutz vor dem Sperrspalt gesammelt hat, behindert der Schmutz den weiteren Durchfluss des Mediums und muss entfernt werden.

Aus der europäischen Patentanmeldung 79 200 598 (EP-A-0 010 338) ist ein Schmutzfilter dieser Art bekannt, bei dem der Sperrkörper um eine Achse senkrecht zur Flussachse um 90 Grad geschwenkt werden muss, um den Sperrkörper aus seiner Filterstellung in seine Reinigungsstellung zu verstellen. Das ist ein sehr langer Verstellweg, der durch den anstehenden, zurückgehaltenen Schmutz leicht behindert werden kann.

Aufgabe der Erfindung ist es, ein Schmutzfilter der eingangs genannten Art so auszugestalten, dass das Verstellen des Sperrkörpers aus der Filterstellung in die Reinigungsstellung durch den anstehenden, zurückgehaltenen Schmutz möglichst wenig behindert wird. Ausserdem ist es Aufgabe der Erfindung, ein Schmutzfilter der eingangs genannten Art so auszugestalten, dass es möglichst einfach ausgebildet und auch möglichst betriebssicher gehandhabt werden kann.

Die Lösung dieser Aufgabe ist im Anspruch 1 gekennzeichnet.

Der Weg, den der Sperrkörper von seiner Filterstellung in seine Reinigungsstellung zurücklegen muss, hängt von der Geometrie des Sperrkörpers und Filterraums ab und lässt sich leicht sehr kurz ausgestalten. Dann öffnet sich bereits nach einer kleinen Verschiebung des Sperrkörpers der Sperrspalt und die ersten Schmutzteilchen können abfliessen und die weitere Verstellung des Sperrkörpers nicht mehr behindern.

Es genügt, zum Reinigen den Sperrkörper in seine Reinigungsstellung zu verschieben, so dass der angesammelte Schmutz durch das fliessende Medium mitgerissen wird. Aus der Spritzdüse tritt dann eine Portion stark verschmutztes Medium. Diese Portion wird verworfen. Danach wird der Sperrkörper wieder in seine Filterstellung versetzt und der Spritzbetrieb kann fortgesetzt werden.

Für eine einwandfreie Funktion ist es besonders wichtig, dass der Sperrspalt exakt dimensioniert ist. Dazu muss der Sperrkörper in Filterstellung exakt in einer vorbestimmten Stellung stehen. Dies wird erzielt durch eine Ausgestaltung der Erfindung nach Anspruch 3. Der Sperrkörper wird danach durch den Druck des fliessenden Mediums in seine durch die Anschlagfläche und die Anschlaggegenfläche definierte Filterstellung getrieben und findet an diesen Flächen, die entsprechend stabil ausgebildet sein können, auch genug Halt gegen den unter Umständen sehr hohen Druck des anströmenden Mediums.

Die Verstellung des Sperrkörpers in Reinigungsstellung gegen die Flussrichtung ist auch zweckmässig, weil der Sperrkörper dann selbsttätig durch das fliessende Medium wieder in seine Filterstellung verstellt werden kann.

Eine einfach ausgestaltete Verstellvorrichtung, die von aussen einfach zu betätigen ist, ist Gegenstand der Ansprüche 4, 5 und 6. Mit dieser Verstellvorrichtung kann der Sperrkörper auch bei durchfliessendem Medium in seine Reinigungsstellung gebracht werden, so dass Schmutzteilchen, die sich vor dem Sperrspalt gesammelt haben, von dem durchfliessenden Medium mitgerissen werden. Die dadurch verschmutzte Portion thermoplastischen Mediums wird verworfen. Bei der Ausgestaltung nach Anspruch 6 kann auch der in Filterstellung befindliche Sperrkörper gegen Verschieben entgegen der Flussrichtung vom Betätigungselement gehalten werden.

Insbesondere bei starkem Schmutzanfall empfiehlt es sich, genügend Platz vorzusehen, wo sich der zurückgehaltene Schmutz sammeln kann ohne den weiteren Durchfluss des thermoplastischen Mediums untragbar zu behindern. Eine entsprechende Ausgestaltung ist Gegenstand des Anspruchs 7.

Die Erfindung wird nun anhand der beigefügten Zeichnung näher erläutert.

In der Zeichnung zeigt:

Figur 1 ein Schmutzfilter nach der Erfindung mit dem Sperrkörper in Filterstellung, zur Hälfte geschnitten, zur Hälfte in Ansicht,

Figur 2 den Schnitt II aus Figur 1,

Figur 3 den Schnitt III aus Figur 1,

Figur 4 den Schnitt IV aus Figur 1,

Figur 5 den Sperrkörper aus Figur 1 allein in der Ansicht gemäss Pfeil V,

Figur 6 das Schmutzfilter aus Figur 1 jedoch mit dem Sperrkörper in Reinigungsstellung,

Figur 7 im Teilschnitt ein anderes Ausführungsbeispiel eines Schmutzfilters, das mit drei Sperrspalten ausgestattet ist,

Figur 8 im Teilschnitt ein weiteres Ausführungsbeispiel eines Schmutzfilters,

Figur 9 im Teilschnitt ein weiteres Ausführungsbeispiel eines Schmutzfilters, und

Figur 10 den Schnitt X–X aus Figur 9.

In der Zeichnung ist mit 1 das Filtergehäuse bezeichnet, das aus zwei Teilen 2 und 3 besteht. Die beiden Teile 2 und 3 sind entlang der Verschraubung 4 lösbar miteinander verbunden. Zur Erleichterung der Verschraubung sind am Teil 2 Sechskantschlüsselflächen 5 und am Teil 3 Sechskantschlüsselflächen 6 vorgesehen. Das vordere Ende des Teils 2 ist als Spritzdüse 7 ausgebildet. Am rückwärtigen Ende des Teils 3 ist eine Anschlussmuffe 8 mit Aussengewinde 9 und einer zugehörigen Anschlagfläche 10 zum Anschrauben des Gehäuses an einen vorgeordneten Zulieferer für das unter Druck stehende fliessfähige, thermoplastische Medium, zum Beispiel Kunststoff.

Im Gehäuse 1 ist eine Zuleitung 11 und eine Ableitung 12 jeweils mit kreisrundem Querschnitt koaxial zur Flussachse 14 ausgespart. Die Zuleitung 11 mündet in einen Filterraum 13, von dem an der gegenüberliegenden Seite die Ableitung 12 ausgeht. Die Flussrichtung für das thermoplastische Medium entspricht dem Pfeil 37.

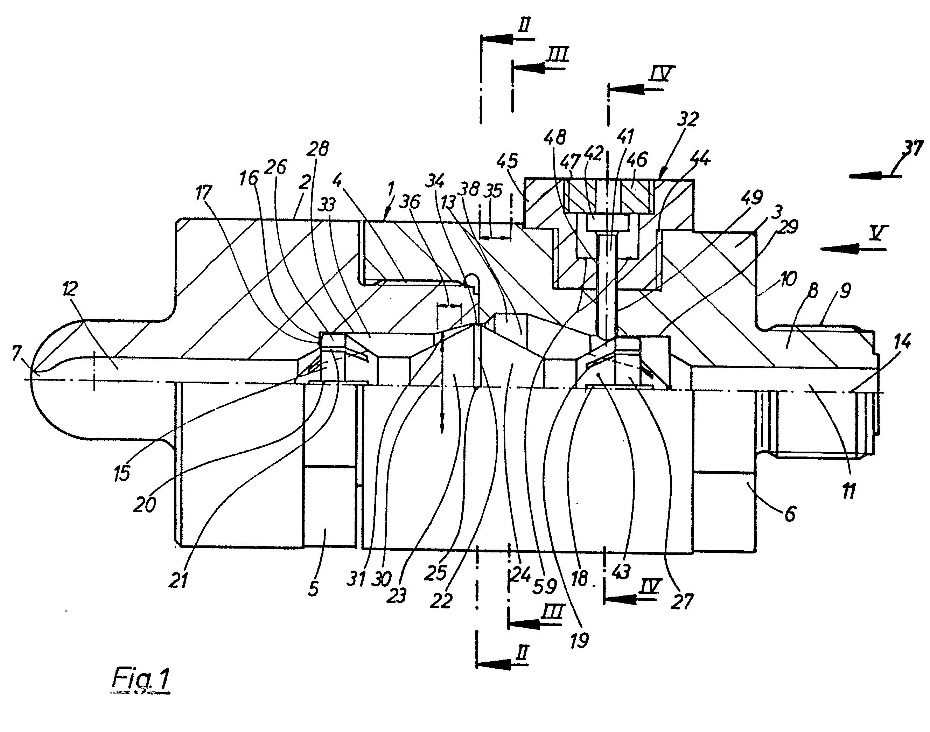

Im Filterraum 13 ist ein loser Sperrkörper 15 eingesetzt, der in Figur 1 in Filterstellung, die er bei Filterbetrieb einnimmt, gezeichnet ist. In dieser Filterstellung liegt der Sperrkörper 15 mit einer zur Flussachse 14 koaxialen, ringförmigen, in Flussrichtung gerichteten Anschlagfläche 16 an einer Anschlaggegenfläche 17 des Gehäuses 1 an, die ebenfalls ringförmig und koaxial zur Flussachse 14 ausgebildet ist und der Flussrichtung entgegengerichtet ist.

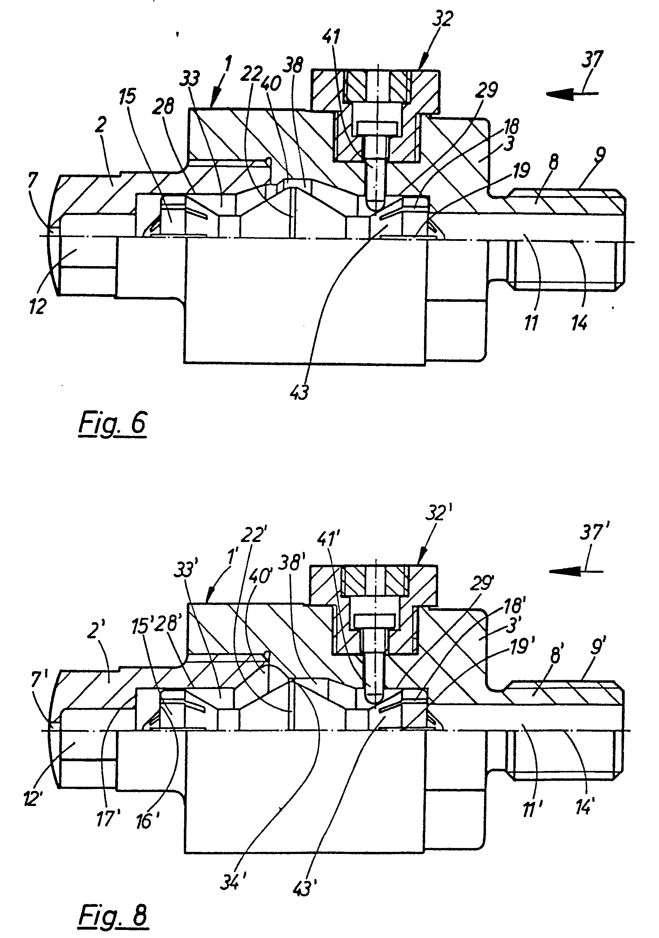

Der Sperrkörper 15 ist, abgesehen von Schlitzen 18 bis 21, rotationssymmetrisch zur Flachachse 14 ausgestaltet und koaxial zur Flussachse und zu dem ebenfalls rotationssymmetrisch ausgebildeten Filterraum 13 angeordnet. Der mittlere Bereich des Sperrkörpers 15 hat die Grundform zweier mit ihrer Basis 22 aufeinanderstehender Konusse 23, 24. Der Sperrkörper weist auf seinem Umfang entlang der aneinanderstossenden Basisflächen eine Abrundung 25 auf. Die beiden Enden des Sperrkörpers sind als Führungskörper 26, 27 ausgebildet. Die beiden Führungskörper passen formschlüssig in Führungsausnehmungen 28, 29 des Gehäuses und sind in diesen Führungsausnehmungen entlang der Flussachse 14 verschieblich geführt. Der Sperrkörper kann aus der in Figur 1 gezeichneten Filterstellung gegen die Flussrichtung in die in Figur 6 gezeichnete Reinigungsstellung verschoben werden. In Filterstellung, in Reinigungsstellung und in allen Zwischenstellungen behält der Sperrkörper seine koaxiale Lage zur Flussachse 14 bei.

Beide Führungskörper 26, 27 weisen auf ihrem Umfang verteilt die bereits erwähnten Schlitze 18 bis 21 auf, die sich entlang der Flussachse erstrecken und den Durchfluss des Mediums gestatten.

Der Aussendurchmesser des Sperrkörpers gemäss Doppelpfeil 30 ist, ausgenommen im Bereich der Schlitze 18 bis 21, überall kleiner als der auf gleicher axialer Höhe gemessene Innendurchmesser gemäss Doppelpfeil 31 des Filterraums 13. Die Folge ist, dass überall im Filterraum ein ringförmiger Zwischenraum 33 ausgespart bleibt, durch den das Filtermedium strömen kann. Das Filtermedium tritt also in die Zuleitung ein, von da durch die Schlitze 18, 19 in den Zwischenraum 33 und von da durch die Schlitze 20, 21 in die Ableitung und von da durch die Düse 7 in eine angeschlossene, nicht dargestellte Giessform.

Im Bereich der Abrundung 25 ist der Zwischenraum 33 am engsten, so dass dort ein ringförmiger Sperrspalt 34 entsteht, der für den Durchfluss des Mediums die Stelle mit engster Durchlassbreite bildet. Die Folge ist, dass Schmutzteilchen vor diesem Sperrspalt 34 zurückgehalten werden. Die Durchmesserdifferenz des Innendurchmessers des Filterraums und des Aussendurchmessers des Sperrkörpers nimmt in Flussrichtung im Bereich 35 vor dem Sperrspalt 34 zunächst ab und im Bereich 36 hinter dem Sperrspalt wieder zu. Die Abnahme der Durchmesserdifferenz im Bereich 35 ist wesentlich stärker als die Zunahme im Bereich 36. Auf diese Weise entsteht in Flussrichtung vor dem Sperrspalt eine Schmutztasche 38, in der sich der Schmutz sammeln kann. Diese Schmutztasche ist möglichst gross ausgebildet, sie erstreckt sich fast bis an den Führungskörper 27.

Der Innendurchmesser des Filterraums ist in Flussrichtung vor dem Sperrspalt 34 grösser als auf der Höhe des Sperrspaltes. Wenn der Sperrkörper in seine in Figur 6 gezeichnete Reinigungsstellung gerät, dann gerät die Abrundung 25, also der breiteste Bereich des Sperrkörpers, dieser weiteren Stelle des Filterraums gegenüber und es entsteht statt des engen Sperrspaltes ein breiter Reinigungsspalt 40. Die Durchlassbreite des Reinigungsspaltes 40 ist grösser als die Durchlassbreite der Schlitze 18 und 19.

Mit 32 ist eine Verstellvorrichtung bezeichnet, die zum Verstellen des Sperrkörpers 15 aus seiner in Figur 1 dargestellten Filterstellung in seine Reinigungsstellung dient. Mit 45 ist ein Aufnahmekörper bezeichnet, der mit dem Gewinde 44 in das Gehäuse eingeschraubt ist. In diesem Aufnahmekörper steckt koaxial eine als Verstellschraube dienende Madenschraube 41. Die Madenschraube ist durch das Gewinde 48 mit dem Aufnahmekörper 45 verschraubt und steckt mit ihrem freien Ende in dem Loch 49 des Gehäuses 1. Die Madenschraube 41 weist eine Imbusschlüsselaufnahme 42 auf. In den Aufnahmekörper ist mittels des Gewindes 47 eine Verschlussschraube 46 eingeschraubt, die einen zentralen Durchbruch aufweist, durch den die Imbusschlüsselaufnahme 42 von aussen zugänglich ist. Die Madenschraube 41 ist radial auf eine Konusfläche 43 des Sperrkörpers gerichtet. Die Konusfläche 43 ist ringförmig und koaxial zur Flussachse 14 und verengt sich in Flussrichtung. Die Madenschraube 41 ist in der in Figur 1 gezeichneten Filterstellung des Filterkörpers auf das weite Ende der Konusfläche gerichtet. In dieser Stellung ist die Madenschraube zurückgedreht und liegt mit ihrem Kopf stramm an der Verschlussschraube 46 an, so dass dort eine Dichtung entsteht. Wird die Madenschraube 41 angezogen, dann drängt sie den Sperrkörper in seine Reinigungsstellung und gleitet dabei auf der Konusfläche 43 zum engeren Ende der Konusfläche. Der Sperrkörper hat seine Reinigungsstellung erreicht, wenn der Kopf der Madenschraube auf der unteren Schulter 59 des Aufnahmekörpers 45 anschlägt. In dieser Reinigungsstellung der Madenschraube besteht Abdichtung zwischen der Schulter 59 und dem Kopf der Madenschraube 41. Die Abdichtungen des Kopfes der Madenschraube in Filterstellung und in Reinigungsstellung der Madenschraube können begünstigt werden durch je eine ringförmige Schneidkante auf beiden Seiten des Kopfes der Madenschraube, der sich in die Verschlussschraube beziehungsweise in die Schulter 59 eindrückt. Wird die Madenschraube aus ihrer Reinigungsstellung wieder zurückgedreht in die in Figur 1 dargestellte Filterstellung, dann weicht der Sperrkörper, dem Druck des anstehenden Mediums folgend, wieder in seine in Figur 1 gezeichnete Filterstellung zurück.

Bei Betrieb wirken die Schlitze 18, 19 als Vorfilter und der Sperrspalt 34 als Hauptfilter. Vor dem Sperrspalt 34 sammelt sich in der Schmutztasche 38 Schmutz, der zurückgehalten ist und schliesslich die Tasche füllt. Wenn das geschehen ist, dann ist die Durchflussbehinderung durch diesen in der Tasche gesammelten Schmutz so gross, dass der Betrieb unterbrochen werden muss. Die Madenschraube 41 wird jetzt angezogen, so dass der Sperrspalt 34 sich zu dem Reinigungsspalt 40 öffnet und das Medium den in der Schmutztasche gesammelten Schmutz mitnehmen kann. Die Schlitze 20, 21 und die Düse 7 sind weit genug, so dass der Schmutz dort ungehindert passieren kann. Die mit dem Schmutz angereicherte Portion des Mediums wird verworfen. Anschliessend wird die Madenschraube 41 wieder zurückgedreht und der Sperrkörper weicht wieder in seine Filterstellung und der Spritzbetrieb kann fortgesetzt werden.

Vor den Schlitzen 18, 19 sammeln sich nur verhältnismässig grosse Schmutzteilchen, die, wenn überhaupt, äusserst selten erwartet werden, so dass dort auch nach langer Betriebszeit keine Störungen durch angesammelten Schmutz zu erwarten sind. Wenn doch einmal eine solche Störung auftritt, dann muss der Betrieb unterbrochen werden und das Filtergehäuse in geöffnetem Zustand gereinigt werden. Wesentlich ist, dass nach der Erfindung der normalerweise anfallende Schmutz in der Schmutztasche gesammelt wird und durch kurzzeitige Betätigung der Madenschraube ausgeblasen werden kann.

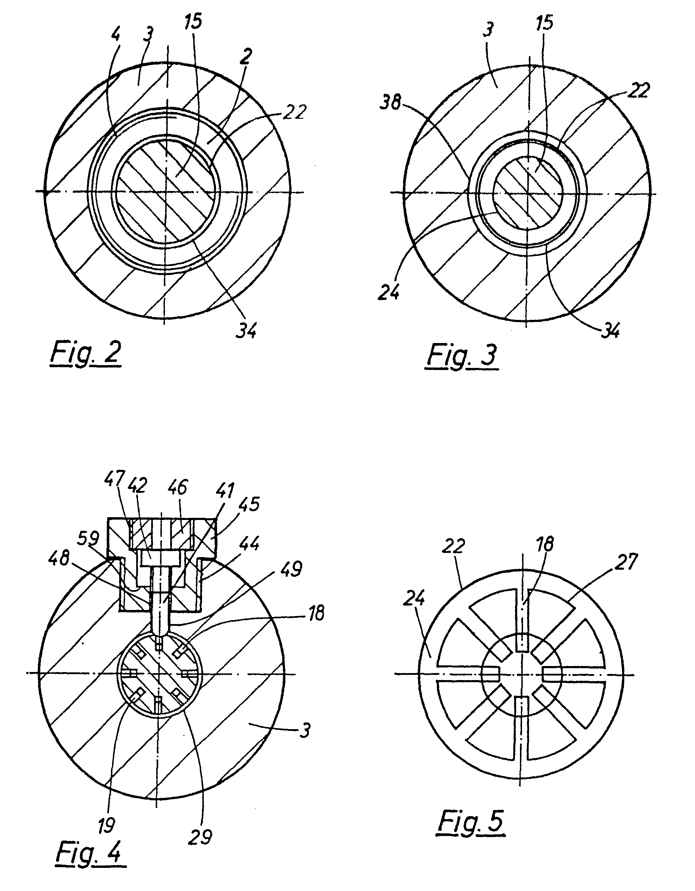

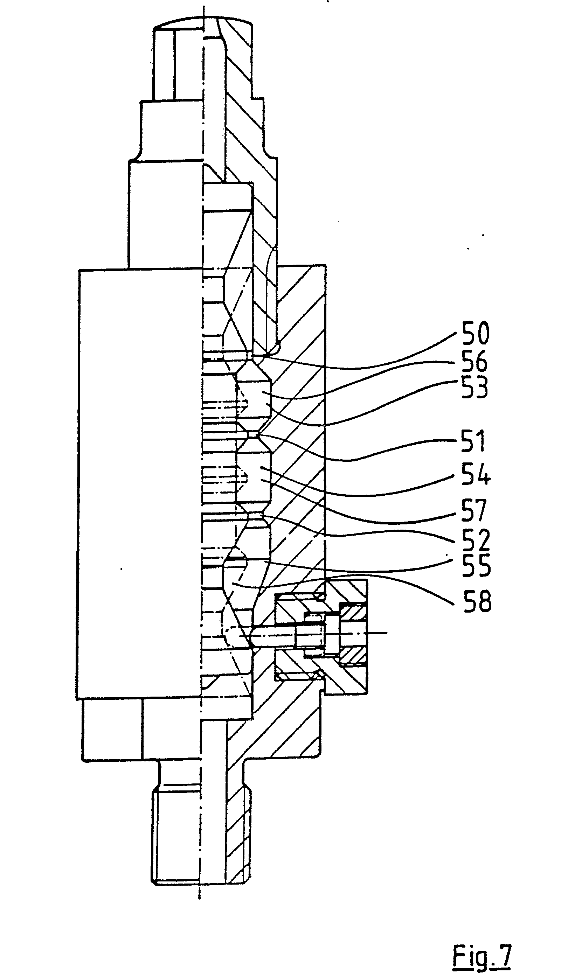

Das in Figur 7 dargestellte Ausführungsbeispiel unterscheidet sich von dem in Figur 1 bis 6 dargestellten nur durch die Ausgestaltung des Filterraums und des Sperrkörpers, so dass drei hintereinandergelegene Sperrspalte 50 bis 52 entstehen. Der Sperrspalt 50 hat eine grössere Durchlassbreite als der Sperrspalt 51 und dieser wiederum eine grössere Durchlassbreite als der Sperrspalt 52. Den drei Sperrspalten sind Reinigungsspalte 53, 54, 55 und Schmutztaschen 56, 57, 58 zugeordnet. Die Sperrspalte erweitern sich zu dem jeweils zugeordneten Reinigungsspalt, wenn der Sperrkörper in seine nur strichpunktiert angedeutete Reinigungsstellung verstellt wird. Die Reinigungsspalte 53, 54, 55 haben sämtlichst eine grössere Durchlassbreite als der Sperrspalt 52, so dass der Schmutz aus allen drei Schmutztaschen durch sämtliche Reinigungsspalte ungehindert abströmen kann, wenn der Sperrkörper in seiner Reinigungsstellung steht.

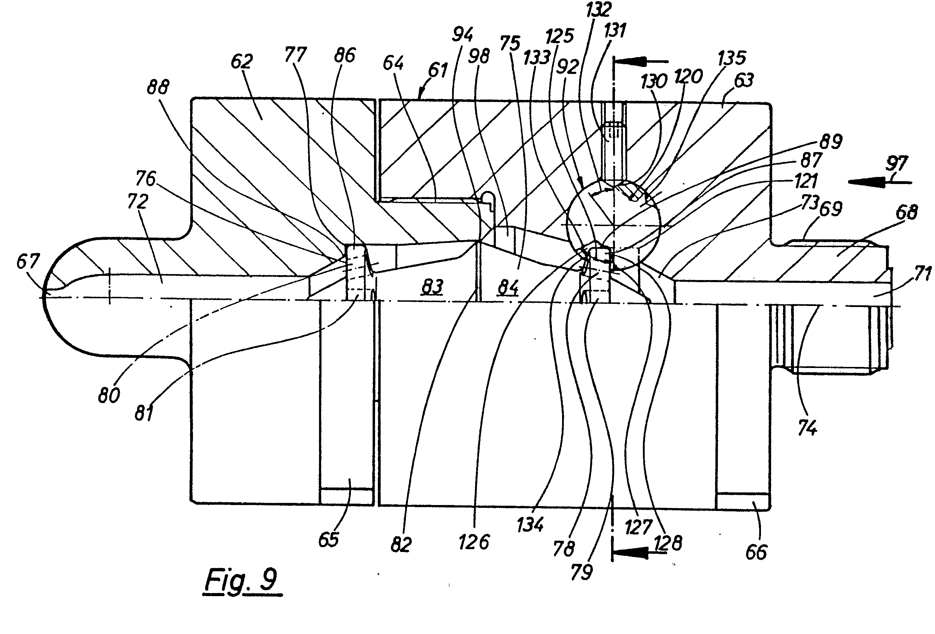

Das in Figur 8 dargestellte Ausführungsbeispiel unterscheidet sich von dem in Figur 1 bis 6 dargestellten Ausführungsbeispiel nur durch die Ausgestaltung des Filterraums 33. Figur 8 zeigt den Schmutzfilter in Filterstellung. In dieser Filterstellung ist der Sperrkörper 15 durch die eingedrehte Madenschraube 41 der Verstellvorrichtung 32 gegen die Flussrichtung nach hinten verschoben. In dieser Stellung besteht nur ein schmaler Sperrspalt 34 im Zwischenraum 33, durch den Schmutzteilchen zurückgehalten werden, die sich in der Schmutztasche 38 sammeln. Zu Reinigungszwecken wird die Madenschraube 41 zurückgedreht. Der Sperrkörper 15 wird dann durch das Filtermedium in Flussrichtung nach vorn getrieben in seine Reinigungsstellung, in der er mit seiner Anschlagfläche 16 an der Anschlaggegenfläche 17 anschlägt. In dieser in Figur 8 nicht gezeichneten Reinigungsstellung hat sich der Sperrspalt 34 auf einen breiteren Reinigungsspalt 40 erweitert. Im übrigen ist das Ausführungsbeispiel nach Figur 8 genauso ausgebildet wie das Ausführungsbeispiel nach Figur 1 bis 6. Einander entsprechende Teile sind in Figur 8 mit der gleichen Bezugsziffer wie in Figur 1 bis 6 bezeichnet, zum Unterschied jedoch mit nachgesetztem Strich.

In Abänderung der dargestellten Ausführungsbeispiele können den Schlitzen 18 bis 21 entsprechende Schlitze auch in denjenigen Gehäuseteilen vorgesehen sein, die die den Führungsausnehmungen 28, 29 entsprechenden Führungsausnehmungen umgeben. Statt der Schlitze können auch Kanäle vorgesehen sein. Unter Umständen genügt ein einziger Führungskörper am einen Ende des Sperrkörpers.

Statt ein oder drei Sperrspalte wie nach Figur 1 beziehungsweise Figur 7 vorgesehen kann man auch eine andere Anzahl von Sperrspalten mit zugehörigen Reinigungsspalten und Schmutztaschen vorsehen, wobei man die Durchmesserverhältnisse entsprechend wählt wie im Text zu Figur 7 angegeben.

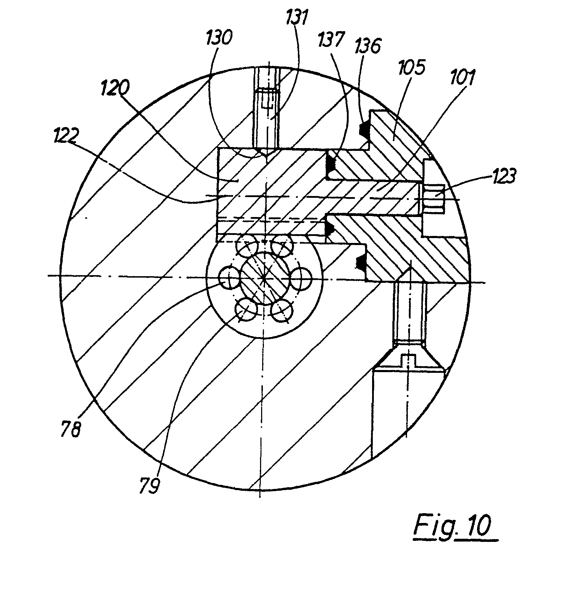

Bei dem in Figur 9 und 10 dargestellten Ausführungsbeispiel ist das Filtergehäuse 61 zweiteilig. Das Teil 62 des Filtergehäuses ist mit dem Teil 63 des Filtergehäuses durch eine zur Flussachse 74 koaxiale Verschraubung 64 verschraubt. Zwei Sechskantschlüsselflächen 65, 66 an jedem der Teile 62 und 63 erleichtern die Verschraubung. Mit 67 ist eine Spritzdüse und mit 68 eine mit Aussengewinde 69 versehene Anschlussmuffe bezeichnet. Eine Zuleitung 71 mündet in einen Filterraum 73. Der Filterraum 73 mündet über eine Ableitung 72 in die Spritzdüse 67. In dem Filterraum 73 liegt ein Sperrkörper 75, der aus zwei etwa kegelförmig gebildeten Konusteilen 83, 84 besteht. Die beiden Konusteile sind mit Wülsten 86, 87 versehen. Durch die Wülste erstrecken sich zur Flussachse 74 achsparallele Kanäle 78 bis 81, die in ihrer Funktion den Schlitzen 18 bis 21 aus Figur 1 bis 6 entsprechen. Mit 92 ist eine Verstellvorrichtung bezeichnet, die in das Filtergehäuse 61 eingelassen ist und eine Betätigungsscheibe 120 aufweist, die an den Filterraum 73 angrenzt.

Abgesehen von den Kanälen 78 bis 81 ist der Sperrkörper 75 rotationssymmetrisch zur Flussachse 74 ausgebildet. Abgesehen von der Betätigungsscheibe 120 sind die Zuleitung 71, der Filterraum 73, die Ableitung 72 und die Spritzdüse 67 rotationssymmetrisch zur Flussachse 74 ausgebildet.

Die beiden als Führungskörper dienenden Wülste 86, 87 sind in entsprechenden Führungsausnehmungen 88, 89 formschlüssig geführt. Der Sperrkörper 75 ist aus seiner ausgezogen dargestellten Filterstellung gegen die Flussrichtung gemäss Pfeil 97 in seine durch die strichpunktierte Linie 121 angedeutete Reinigungsstellung verstellbar. In Filterstellung und in Reinigungsstellung des Sperrkörpers ist dieser durch formschlüssige Anlage der Wülste 86, 87 in den Führungsausnehmungen 88, 89 koaxial geführt. Der Filterraum 73 wird durch die beiden Wülste 86, 87 unterbrochen. Der Fluss des fliessfähig an der Zuleitung 71 eingedrückten, thermoplastischen Mediums erfolgt im Bereich der Wülste durch die Kanäle 78 bis 81. Der Gesamtquerschnitt der Kanäle ist deshalb grösser als der engste Querschnitt des Filterraums in Filterstellung. Der engste Querschnitt des Filterraums in Filterstellung wird gebildet durch einen Sperrspalt 94. Flussaufwärts des Sperrspaltes ist der Filterraum 73 zu einer Schmutztasche 98 erweitert, in der sich der vom Filtermedium mitgeführte Schmutz, der am Sperrspalt zurückgehalten wird, sammeln kann. Stromabwärts vom Sperrspalt ist der Filterraum stark erweitert im Interesse eines möglichst geringen Strömungswiderstandes.

Für die Schmutztasche 98 weist das Filtergehäuse 61 eine Ausnehmung auf. Zusätzlich kann auch das Konusteil 84 eingeschnürt sein entsprechend wie es beim Konusteil 83 der Fall ist. Statt der Einschnürung des Konusteils 83 oder zusätzlich zu dieser kann auch das Teil 62 des Filtergehäuses eingeschnürt sein, entsprechend wie es beim Teil 63 für die Bildung der Schmutztasche 98 der Fall ist.

Zum Einbau und zu Reparaturzwecken werden die beiden Teile 62 und 63 auseinandergeschraubt, dann kann man den Sperrkörper herausnehmen. Zum Säubern der Schmutztasche 98 ist das nicht erforderlich. Zur Reinigung der Schmutztasche wird der Sperrkörper 75 gegen die Flussrichtung in seine Reinigungsstellung verschoben. Dadurch öffnet sich der Sperrspalt 94, denn die den Sperrspalt begrenzende weiteste Basis 82 des Sperrkörpers 75 gerät dadurch in Gegenüberstellung zu weiter zurückliegenden Teilen des Filtergehäuses, die die Schmutztasche 98 bilden. Der Schmutz aus der Schmutztasche wird durch das durchströmende Filtermedium mitgerissen und verlässt über die Spritzdüse 67 das Filtergehäuse. Die auf diese Weise intensiv verschmutzte Portion des Filtermediums wird verworfen. Anschliessend wird der Sperrkörper in seine Filterstellung zurückgeschoben.

Zum Verstellen des Sperrkörpers 75 dient die bereits erwähnte Verstellvorrichtung 92. Zur Verstellvorrichtung 92 gehört ein Verstellorgan 101, das um seine Längsachse 122 drehbar in einem Aufnahmekörper 105 gelagert ist. Der Aufnahmekörper 105 ist in das Gehäuse 61 eingepasst und eingeschliffen. Das rückwärtige Ende des Verstellorgans 101 ist mit Sechskantschlüsselflächen 123 ausgebildet, die von der Aussenseite des Filtergehäuses zugänglich sind. Am vorwärtigen Ende des Verstellorgans 101 ist die Betätigungsscheibe 120 drehsteif befestigt. Die Betätigungsscheibe weist einen sich über ein Umfangssegment gemäss Doppelpfeil 125 erstreckenden Ausschnitt 126 auf. Der Wulst 87 ragt in Filterstellung sowie in Reinigungsstellung des Sperrkörpers in diesen Ausschnitt 126 und passt in diesen mit Spiel.

Die Betätigungsscheibe 120 ist in Figur 9 in ihrer der Filterstellung des Sperrkörpers entsprechenden ersten Stellung ausgezogen gezeichnet. In dieser Stellung liegt die eine den Ausschnitt 126 begrenzende radiale Schulter 127 an der ihr gegenüberstehenden Anschlagfläche 128 des Wulstes 87 an. In der ersten Stellung ist die Betätigungsscheibe 120 durch eine in eine Sicherungsmulde eingreifende, in das Filtergehäuse eingeschraubte Madenschraube gesichert. Die Madenschraube 131 ist von aussen zugänglich und lösbar. In der gezeichneten Filterstellung liegt der Sperrkörper 75 mit seiner Anschlagfläche 76 an einer Anschlaggegenfläche 77 des Filtergehäuses 61 an. Ausserdem liegt die Anschlagfläche 128 an der Schulter 127 an. Der Sperrkörper 75, der durch den Druck des durchfliessenden Filtermediums in seine Filterstellung gedrängt wird, kann auch bei nachlassendem Druck des Filtermediums nicht aus seiner Filterstellung zurückweichen. Er wird daran gehindert durch die Schulter 127. Das ist vorteilhaft, weil auf diese Weise immer sichergestellt ist, dass der Sperrspalt 94 sich bei Filterbetrieb auch nicht geringfügig öffnet beziehungsweise der Sperrkörper in seiner Filterstellung nicht hin- und herschwimmt. Mit 136 und 137 sind Dichtringe bezeichnet zum Abdichten des Filterraums.

Zum Reinigen wird der Sperrkörper 75 mit Hilfe der Verstellvorrichtung 92 in seine Reinigungsstellung verschoben. Zu diesem Zweck wird die Madenschraube 131 gelöst. Dann wird an der Sechskantschlüsselfläche 123 mit einem Schlüssel das Verstellorgan 101 um einen spitzen Winkel gemäss Doppelpfeil 132 bezogen auf die Blickrichtung des Beschauers von Figur 9 gegen den Uhrzeigersinn verdreht. Die den Ausschnitt 126 begrenzende Schulter 133 gerät dabei mit der ihr gegenüberstehenden Anschlagfläche 134 des Wulstes in Kontakt und schiebt den Sperrkörper in seine Reinigungsstellung, in der der Sperrspalt 94 weit geöffnet ist. Für die Reinigungsstellung ist eine zweite, der Sicherungsmulde 130 entsprechende Sicherungsmulde 135 vorgesehen. In diese wird die Madenschraube 131 eingeschraubt wodurch die Verstellvorrichtung 92 und damit auch der Sperrkörper 75 in Reinigungsstellung fixiert sind. Dann wird eine Portion Filtermedium hindurchgetrieben, das den in der Schmutztasche 98 gesammelten Schmutz mitnimmt, dann wird bei gelöster Madenschraube die Verstellvorrichtung und damit der Sperrkörper wieder in die gezeichnete Stellung zurückgeschoben und das Schmutzfilter ist gereinigt und wieder betriebsbereit.

**Patentansprüche**

1. Schmutzfilter für zäh fliessfähige, thermoplastische Medien

mit einem in einem öffenbaren Gehäuse (1, 2, 3) ausgesparten Filterraum (13), in dem ein Sperrkörper (15; 75) sitzt,

mit einer im Gehäuse ausgesparten Zuleitung (11), die in den Filterraum (13) mündet,

mit einer im Gehäuse ausgesparten Ableitung (12), die auf der der Mündung der Zuleitung gegenüberliegenden Seite des Sperrkörpers vom Filterraum ausgeht,

mit einem ringförmigen Spalt (34) zwischen einem koaxial zu einer Flussachse gelegenen Umfangsbereich des Sperrkörpers und der gegenüberliegenden Innenwand des Filterraums, welcher Spalt Teil der Strömungsverbindung zwischen Zuleitung und Ableitung ist,

bei der der Sperrkörper verstellbar ist aus einer Filterstellung in eine Reinigungsstellung,

bei der in Filterstellung des Sperrkörpers der ringförmige Spalt ein Sperrspalt ist, der so eng ist, dass die zurückzuhaltenden Schmutzteile nicht passieren können,

bei der in Reinigungsstellung des Sperrkörpers der ringförmige Spalt ein Reinigungsspalt ist, der weiter ist als der Sperrspalt, so dass die vom Sperrspalt zurückgehaltenen Schmutzteilchen passieren können, und

mit einem von aussen zugänglichen Verstellorgan (32) zum Verstellen des Sperrkörpers aus seiner Filterstellung in seine Reinigungsstellung und zurück, dadurch gekennzeichnet, dass der Sperrkörper (15; 75) entlang der Flussachse (14, 74) verschieblich ist aus seiner Filterstellung in seine Reinigungsstellung und umgekehrt, und

dass an dem dem Zulauf zugekehrten Ende des Sperrkörpers ein Führungskörper (27; 87) angeformt ist, der einen ringförmigen, zur Flussachse (14, 74) und radial zur Flussachse nach aussen ragenden Wulst (27, 87) aufweist und formschlüssig und in Richtung der Flussachse verschieblich in eine Führungsausnehmung (28, 29, 88, 89) des Gehäuses passt,

dass in dem Wulst des Führungskörpers auf den Umfang verteilt Kanäle (18–21, 78–81) für den Durchfluss des thermoplastischen Mediums ausgespart sind, deren Durchlassbreite grösser ist als die des Sperrspaltes, und dass das Verstellorgan (41, 101) kraftschlüssig an den Umfang des Wulstes gekuppelt ist.

2. Schmutzfilter nach Anspruch 1, dadurch gekennzeichnet, dass an beiden Enden des Sperrkörpers (15, 75) je ein Führungskörper (26, 27, 86, 87) befestigt ist mit einer zugehörigen Führungsausnehmung (28, 29, 88, 89) im Gehäuse (1, 61) und zugehörigen Kanälen (18–21, 78–81).

3. Schmutzfilter nach Anspruch 1 oder 2, dadurch gekennzeichnet,

dass der Sperrkörper (15, 75) gegen die Flussrichtung in seine Reinigungsstellung verstellbar ist,

dass der Sperrkörper (15, 75) eine in Flussrichtung gerichtete, zur Flussachse (14, 74) koaxiale, ringförmige Anschlagfläche (16, 76) aufweist,

dass am Gehäuse (1, 61) eine an den Filterraum (13, 73) angrenzende, gegen die Flussrichtung gerichtete, zur Flussachse koaxiale, ringförmige Anschlaggegenfläche (17, 77) vorgesehen ist, und

dass in Filterstellung des Sperrkörpers der Sperrkörper mit seiner Anschlagfläche (16, 76) an der Anschlaggegenfläche (17, 77) des Gehäuses (1, 61) anliegend abgestützt ist.

4. Schmutzfilter nach Anspruch 1, dadurch gekennzeichnet, dass ein Führungskörper (15, 75) eine ringförmige, zur Flussachse (14, 74) koaxiale Betätigungsfläche (43, 128, 134) aufweist, die schräg zur Flussrichtung (37, 97) steht,

dass das Verstellorgan (41, 101) in Richtung radial zur Flussachse langgestreckt und in dieser Richtung verschieblich ist,

dass das Verstellorgan mit seinem rückwärtigen Ende bis zur Aussenseite des Filtergehäuses reicht und dort als Handhabe (42, 123) zum Verstellen ausgebildet ist,

dass das vorwärtige Ende des Verstellorgans als Betätigungselement (41, 120) ausgebildet ist und bis an die Betätigungsfläche des Führungskörpers reicht und unter kraftschlüssiger Einwirkung auf diese Betätigungsfläche beim Verstellen des Verstellorgans in seiner Längsrichtung den Sperrkörper in Richtung der Flussachse verschiebt.

5. Schmutzfilter nach Anspruch 1, dadurch gekennzeichnet, dass das Verstellorgan (41, 101) ein Betätigungselement (120) aufweist, das zum Verstellen um seine Längsachse (122) drehbar gelagert ist,

dass die Längsachse des Betätigungselementes in einer Ebene senkrecht zur Flussachse liegt,

dass das Betätigungselement eine zur Längsachse des Betätigungselementes koaxiale Betätigungsscheibe ist,

dass die Betätigungsscheibe einen sich über ein Umfangssegment erstreckenden Ausschnitt (126) aufweist, und

dass der Wulst (87) eines Führungskörpers in Filterstellung sowie in Reinigungsstellung des Sperrkörpers in den Ausschnitt der Scheibe ragt und mit Spiel in diesen passt.

6. Schmutzfilter nach Anspruch 5, dadurch gekennzeichnet, dass die Betätigungsscheibe (120) aus einer der Filterstellung des Sperrkörpers entsprechenden ersten Stellung in eine der Reinigungsstellung des Sperrkörpers entsprechende zweite Stellung und zurück um einen spitzen Winkel (132) verdrehbar ist,

dass die Betätigungsscheibe in ihrer ersten und in ihrer zweiten Stellung durch ein von der Aussenseite des Gehäuses (61) zugängliches Arretierungselement (131) lösbar gegen Verdrehung arretierbar ist,

dass in der ersten Stellung der Betätigungsscheibe die eine radiale, den Ausschnitt (126) begrenzende Schulter (127) der Betätigungsscheibe an einer ihr gegenüberstehenden Anschlagfläche (128) des in den Ausschnitt ragenden Wulstes (87) anliegt, und

dass in der zweiten Stellung die andere radiale, den Ausschnitt begrenzende Schulter (133) der Betätigungsscheibe an einer ihr gegenüberstehenden Anschlagfläche (134) des in die Ausnehmung ragenden Wulstes anliegt.

7. Schmutzfilter nach einem der vorhergehenden Ansprüche, dadurch gekennzeichnet, dass, bezogen auf den in Filterstellung befindlichen Sperrkörper (15, 75), flussaufwärts des Sperrspaltes (34, 94) durch eine Erweiterung des Filterraums (13, 73) eine Schmutztasche (38, 98) gebildet ist.

**Revendications**

1. Filtre à impuretés pour les milieux thermoplastiques à écoulement visqueux,

comprenant un espace de filtrage (13) qui est ménagé dans un corps (1, 2, 3) pouvant être ouvert, et dans lequel est logé un organe de fermeture (15; 75),

comprenant un conduit d'amenée (11) qui est ménagé dans le corps et qui débouche dans l'espace de filtrage (13),

comprenant un conduit de sortie (12) qui est ménagé dans le corps et qui part de l'espace de filtrage du côté de l'organe de fermeture opposé à l'embouchure du conduit d'amenée,

comprenant un interstice annulaire (34) entre une région périphérique de l'organe de fermeture disposée de manière coaxiale par rapport à un axe d'écoulement et la paroi intérieure opposée de l'espace de filtrage, cet interstice formant une partie du passage destiné à l'écoulement entre le conduit d'amenée et le conduit de sortie,

dans lequel l'organe de fermeture est réglable depuis une position de filtrage jusqu'à une position de fermeture,

dans lequel, dans la position de filtrage de l'organe de fermeture, l'interstice annulaire est un interstice de fermeture qui est assez étroit pour que les particules d'impuretés à retenir ne puissent pas passer,

dans lequel, dans la position de nettoyage de l'organe de fermeture, l'interstice annulaire est un interstice de nettoyage qui est plus large que l'interstice de fermeture, de sorte que les particules d'impuretés retenues par l'interstice de fermeture puissent passer, et:

comprenant un organe de déplacement (32) accessible de l'extérieur pour déplacer l'organe de fermeture depuis sa position de filtrage jusqu'à sa position de nettoyage et inversement, caractérisé par le fait:

que l'organe de fermeture (15; 75) peut être déplacé le long de l'axe découlement (14; 74) depuis sa position de filtrage jusqu'à sa position de nettoyage et inversement, et

qu'un organe de guidage (27; 87) est formé sur l'extrémité de l'organe de fermeture tournée vers l'amenée, qu'il présente un bourrelet annulaire (27; 87) en saillie vers l'extérieur par rapport à l'axe d'écoulement (14; 74) et radialement par rapport à l'axe d'écoulement, et qu'il s'ajuste par conjugaison des formes dans un évidement de guidage (28, 29; 88, 89) du corps en pouvant être déplacé dans la direction de l'axe d'écoulement,

que des canaux (18–21; 78–81) destinés au passage du milieu thermoplastique sont ménagés dans le bourrelet de l'organe de guidage en étant répartis sur sa périphérie, canaux dont la largeur de passage est supérieure à celle de l'interstice de fermeture, et:

que l'organe de réglage (41; 101) est accouplé à la périphérie du bourrelet par conjugaison de forces.

2. Filtre à impuretés selon la revendication 1, caractérisé par le fait qu'à chacune des deux extrémités de l'organe de fermeture (15; 75) est fixé un organe de guidage (26, 27; 86, 87) avec un évidement de guidage correspondant (28, 29; 88, 89) dans le corps(1; 61) et des canaux correspondants (18–21; 78–81).

3. Filtre à impuretés selon la revendication 1 ou 2, caractérisé par le fait:

que l'organe de fermeture (15; 75) peut être déplacé à l'encontre de la direction de l'écoulement jusqu'à sa position de nettoyage,

que l'organe de fermeture (15; 75) présente une surface de butée (16; 76) annulaire, coaxiale à l'axe d'écoulement (14; 74) et dirigée dans la direction de l'écoulement,

qu'il est prévu sur le corps (1; 61) une contre-surface de butée (17; 77) annulaire, coaxiale à l'axe d'écoulement, dirigée à l'encontre de la direction d'écoulement et contiguë à l'espace de filtrage (13; 73), et:

que, dans la position de fermeture de l'organe de fermeture, l'organe de fermeture s'appuie par sa surface de butée (16; 76) sur la contre-surface de butée contiguë (17; 77) du corps (1; 61).

4. Filtre à impuretés selon la revendication 1, caractérisé par le fait:

qu'un organe de guidage (15; 75) présente une surface d'actionnement annulaire (43; 128, 134) qui est coaxiale à l'axe d'écoulement (14; 74) et qui s'étend obliquement par rapport à la direction de l'écoulement (37; 97),

que l'organe de déplacement (41; 101) s'étend longitudinalement dans une direction radiale par rapport à l'axe d'écoulement et peut être déplacé dans cette direction,

que l'organe de déplacement arrive par son extrémité arrière jusqu'au côté extérieur du corps du filtre et y est réalisé sous la forme d'un organe de maniement (42; 123) destiné à son déplacement,

que l'extrémité avant de l'organe de déplacement est réalisée sous la forme d'un élément d'actionnement (41; 120) qu'elle arrive jusqu'à la surface d'actionnement de l'organe de guidage et que, par action à force sur cette surface d'actionnement, lors du déplacement de l'organe de déplacement dans sa direction longitudinale, elle déplace l'organe de fermeture en direction de l'axe d'écoulement.

5. Filtre à impuretés selon la revendication 1, caractérisé par le fait:

que l'organe de déplacement (41; 101) présente un élément d'actionnement (120) qui, pour le déplacement, est monté tournant autour de son axe longitudinal (122),

que l'axe longitudinal de l'élément d'actionnement s'étend dans un plan perpendiculaire à l'axe d'écoulement,

que l'élément d'actionnement est un disque d'actionnement coaxial par rapport à l'axe longitudinal de l'élément d'actionnement,

que le disque d'actionnement présente une entaille (126) s'étendant au-dessus d'un segment périphérique, et:

que le bourrelet (87) dun corps de guidage, dans la position de filtrage de l'organe de fermeture aussi bien que dans sa position de nettoyage, fait saillie dans l'entaille du disque et s'ajuste avec jeu dans celle-ci.

6. Filtre à impuretés selon la revendication 5, caractérisé par le fait:

que le disque d'actionnement (120) peut tourner d'un angle aigu (132) depuis une première position correspondant à la position de filtrage de l'organe de fermeture jusqu'à une seconde position correspondant à la position de nettoyage de l'organe de fermeture, et inversement,

que le disque d'actionnement, dans sa première et dans sa seconde position, peut être bloqué contre la rotation, de manière à pouvoir être débloqué, par un élément d'arrêt (131) accessible depuis le côté extérieur du corps (61),

que, dans la première position du disque d'actionnement, l'un (127) des épaulements radiaux du disque d'actionnement qui limitent l'entaille (126) repose sur une surface de butée (128) lui faisant face du bourrelet (87) qui fait saillie dans l'entaille, et:

que, dans la seconde position du disque d'actionnement, l'autre (133) des épaulements radiaux du disque d'actionnement qui limitent l'entaille repose sur une surface de butée (134) lui faisant face du bourrelet qui fait saillie dans l'entaille.

7. Filtre à impuretés selon l'une des revendications précédentes, caractérisé par le fait:

qu'une poche à impuretés (38; 98) est formée par un élargissement de l'espace de filtrage (13; 73), en amont de l'interstice de fermeture (34; 94) par rappprt à l'organe de fermeture (15; 75) qui se trouve en position de filtrage.

**Claims**

1. Dirt filter for viscously fluid thermoplastic media with a filter space (13), formed in an openable housing (1, 2, 3), in which a blocking body (15; 75) is seated,

with a feed line (11), formed in the housing, which opens into the filter space (13),

with a discharge line (12) formed in the housing, which leads out of the filter space on the side of the blocking body opposite to the mouth of the feed line,

with an annular gap (34) between a peripheral region of the blocking body coaxial to a flow axis and the oppositely lying inner wall of the filter space, which gap is part of the flow connection between feed line and discharge line,

in which the blocking body is adjustable from a filter position into a cleaning position,

in which the annular gap is a blocking gap in the filter position of the blocking body which is so narrow that the dirt components to be retained cannot pass,

in which the annular gap is a cleaning gap in the cleaning position of the blocking body, which is wider than the blocking gap, so that the dirt particles retained by the blocking gap can pass, and

with an adjusting member (32) accessible from the outside for adjusting the blocking body out of its filter position into its cleaning position and back, characterized in that

the blocking body (15; 75) is displaceable along the flow axis (14, 74) from its filter position into its cleaning position and conversely, and

in that there is formed on the end of the blocking body facing the feed line a guide body (27; 87) which has an annular, to the flow axis (14, 74) and outwardly projecting from the flow axis rim which mates in a guide recess (28, 29, 88, 89) of the housing and is displaceable in the direction of the flow axis,

in that distributed channels (18–21, 78–81) for the through flow of the thermoplastic medium are formed in the rim of the guide body distributed round the periphery, with a through width greater than that of the blocking gap, and

in that the adjusting member (41, 101) is coupled by force engagement on the periphery of the rim.

2. Dirt filter according to claim 1, characterized in that a guide body (26, 27, 86, 87) is fixed at each of the two ends of the blocking body (15, 75) with a corresponding guide recess (28, 29, 88, 89) in the housing (1, 61) and associated channels (18–21, 78–81).

3. Dirt filter according to claim 1 or 2, characterized in that the blocking body (15, 75) is adjustable into its cleaning position against the direction of flow,

in that the blocking body (15, 75) has an annular abutment surface (16, 76) directed in the flow direction, coaxial to the flow axis (14, 74),

in that there is provided an annular counter abutment surface de-limiting the filter space (13, 73) directed against the flow direction, coaxial to the flow axis, and

in that in the filter position of the blocking body the blocking body abuts with its abutment surface (16, 76) on the counter abutment surface (17, 77) of the housing (1, 61).

4. Dirt filter according to claim 1, characterized in that a guide body (15, 75) has an annular actuating surface (43, 128, 134) coaxial with the flow axis (14, 74), which surface is inclined to the flow direction (37, 97),

in that the adjusting member (41, 101) extends in a radial direction relative to the flow axis and is displaceable in this direction,

in that the adjusting member extends at its rear end outside the filter housing and is there formed as a hand grip (42, 123) for the adjustment,

in that the forward end of the adjusting member is formed as an actuating element (41, 124) and extends to the actuating surface of the guide body and displaces the blocking body in the direction of the flow axis by force action on this actuating surface on adjustment of the adjusting member in its longitudinal direction.

5. Dirt filter according to claim 1, characterized in that, the adjusting member (41, 101) has an actuating element (120) which is mounted rotatable about its longitudinal axis (122) for the adjustment,

in that the longitudinal axis of the actuating element lies in a plane perpendicular to the flow axis,

in that the actuating element is an actuating disc coaxial with the longitudinal axis of the actuating element,

in that the actuating disc has a cut out (126) extending over a peripheral segment, and

in that the rim (87) of a guide body projects into the cut out of the disc both in the filter position and the cleaning position of the blocking body and fits with play therein.

6. Dirt filter according to claim 5, characterized in that the actuating disc (120) is rotatable through an acute angle (132) out of a first position corresponding to the filter position of the blocking body into a second position corresponding to the cleaning position of the blocking body, and back,

in that the actuating disc can be releasably locked against rotation in its first and in its second position by a locking element (131) accessible from the outside of the housing (61),

in that in the first position of the actuating disc a radial shoulder (127) of the actuating disc de-limiting the cut-out (126) bears on an opposed abutment surface (128) of the rim (87) projecting into the cut-out and,

in that the second position, the other radial shoulder (133) of the actuating disc de-limiting the cut-out bears on an opposed abutment surface (134) of the rim projecting into the cut-out.

7. Dirt filter according to one of the preceding claims, characterized in that

a dirt pocket (38, 98) is formed by an enlargement of the filter space (13, 73) upstream of the blocking gap (34, 94), relative to the blocking body (15, 75) in the filter position.

Fig.1

EP 0 172 468 B1

10/6

Fig. 2

Fig. 3

Fig. 4

Fig. 5

_Fig. 6_

_Fig. 8_

4/6

50
56
53

51

54

57
52
55

58

Fig.7

Fig. 9

EP 0 172 468 B1

6/6

Fig. 10